# EUROPÄISCHE PATENTSCHRIFT

(11) **EP 2 870 107 B1**
(45) Veröffentlichungstag und Bekanntmachung des Hinweises auf die Patenterteilung: **17.01.2018**
(21) Anmeldenummer: 13734753.0
(22) Anmeldetag: 05.07.2013
(51) Int. Cl.: C01G 37/00, C22B 1/02, C22B 3/00, C22B 7/00, C22B 34/32, C09C 1/58, C22B 3/14, C04B 14/30, C04B 7/34

(54) **VERFAHREN ZUR REDUKTION VON SECHSWERTIGEM CHROM IN OXIDISCHEN FESTSTOFFEN**
METHOD FOR REDUCING HEXAVALENT CHROMIUM IN OXIDIC SOLIDS
PROCÉDÉ DE RÉDUCTION DE CHROME HEXAVALENT DANS DES MATIÈRES SOLIDES OXYDÉES

(30) Priorität: 06.07.2012 EP 12175378; 14.02.2013 EP 13155203
(43) Veröffentlichungstag der Anmeldung: 13.05.2015
(73) Patentinhaber: LANXESS Deutschland GmbH, 50569 Köln (DE)
(72) Erfinder: ORTMANN, Rainer, 50859 Köln (DE); FRIEDRICH, Holger, 2940 Newcastle (ZA); LABUSCHAGNE, Chris, 2940 Newcastle (ZA); VAN DER MERWE, Dawie, 2940 Newcastle (ZA); VISAGIE, Barry, 2940 Newcastle (ZA)
(86) Internationale Anmeldenummer: PCT/EP2013/064292
(87) Internationale Veröffentlichungsnummer: WO 2014/006196

(56) Entgegenhaltungen:
- WANG ET AL.: JOURNAL OF HAZARDOUS MATERIALS, Bd. 149, 2007, Seiten 440-444, XP002688550, in der Anmeldung erwähnt

## Beschreibung

Die Erfindung betrifft ein Verfahren zur Reduktion von sechswertigem Chrom in oxidischen Feststoffen. Insbesondere handelt es sich um die Reduktion des Cr(VI) in sogenannten Chromerzrückständen (im englischen auch als Chromite Ore Processing Residue (COPR) bezeichnet), welche als Nebenprodukte bei der Gewinnung von Chromchemikalien ausgehend von Chromit (Chromeisenstein) anfallen, sowie deren Verwendung als Füllstoff bei der Herstellung von kalk- und/oder zementgebundenen Baustoffen, von Asphalt und/ oder als Ausgangsmaterial zur Herstellung von Stahl und/ oder sonstigen Legierungen.

Von den verschiedenen Mineralien, die Chrom enthalten, sind nur die Chromspinelle, speziell der Chromit (Chromeisenstein, idealisiert: FeCr₂O₄), von wirtschaftlicher Bedeutung.

Natriumdichromat ist das mit Abstand wichtigste Ausgangsmaterial für die Herstellung von Chromchemikalien. Der einzige in großem Umfang industriell ausgeführte Prozess zur Gewinnung von Natriumdichromat, ausgehend von Chromit, besteht in dessen oxidierendem alkalischen Aufschluss mit Natriumcarbonat (Soda) oder Natriumhydroxid und Luft beziehungsweise Sauerstoff in Gegenwart eines Magerungsmittels bei Temperaturen von ca. 1100 °C. Auf diesen, in der Fachliteratur ausführlich beschriebenen Prozess, soll hier nur kurz eingegangen werden (siehe beispielsweise Ullmann's Encyclopedia of Industrial Chemistry, online Edition, Vol. A9, Seite 163-166, Wiley-VCH Verlag GmbH Co. KGaA, Weinheim 2012, published online 15. Juni 2000). Er umfasst im Wesentlichen drei Stufen:
- Oxidativer Aufschluss von Chromerz oder Chromerz-Konzentrat unter alkalischen Bedingungen
- Auslaugen des gebildeten Natriummonochromates und Abtrennung der Natriummonochromat-haltigen Lösung vom unlöslichen Rückstand (Chromerzrückstand) durch Fest-Flüssig-Separation
- Umwandlung des Natriummonochromates in Natriumdichromat durch Sauerstellung der Lösung.

Neben Chromit und Natrium-Alkalien, speziell Natriumcarbonat, werden der Ofenmischung noch Stoffe zugesetzt, die die Porosität des Ofeninhaltes während des Aufschlusses erhalten sollen (sogenannte Magerungsmittel). Die Porosität ist erforderlich, um eine ausreichende Oberfläche für die Reaktion mit Sauerstoff zu bilden. Die Chromausbeute bei der Verwendung von Chromit liegt je nach Zusammensetzung im Bereich von 74% bis 90% des im Chromerz vorhandenen Chroms.

Bei dem Herstellungsverfahren von Natriumdichromat kann ein Teil des Natriumcarbonats, das für den alkalischen Aufschluss nötig ist, durch Calciumcarbonat CaCO₃ oder Dolomit (CaMg(CO₃)₂) oder Calciumoxid CaO (lime) ersetzt werden. Solche Verfahren bezeichnet man - je nach Anteil an zugesetztem Calciumoxid - als High Lime-, No Lime- oder Low Lime-Verfahren. Die Nachteile beim Einsatz von Calciumoxid sind, dass pro hergestellter Tonne Natriumdichromat bis zu vier Tonnen giftigen Sondermülls entstehen, der aufgrund seines Calciumchromat-Anteils krebserregend ist. Deshalb ist es erstrebenswert, dem alkalischen Aufschluss möglichst wenig Calciumoxid beizufügen.

Die Abtrennung des gelösten Monochromates erfolgt nach Abkühlung und Laugung bei einem durch Zugabe von Säuren oder Dichromat-Lösung eingestellten pH-Wert mittels Fest-Flüssig-Separation, in der Regel über Filtration. Der unlösliche Rückstand wird mehrfach gelaugt, um den Gehalt an wasserlöslichem Cr(VI) zu verringern. Ein Teil des Rückstandes kann getrocknet werden, um dann als Magerungsmittel erneut der Ofenmischung zugeführt zu werden.

Der verbleibende Rückstand, der sogenannte Chromerzrückstand (Chromite Ore Processing Residue, COPR), enthält nach wie vor Cr(VI). Ein Teil des Cr(VI) liegt nach wie vor in wasserlöslicher Form als Natriummonochromat vor, allerdings macht eine Auslaugung bei niedrigen Cr(VI)-Gehalten wirtschaftlichen keinen Sinn mehr. Darüber hinaus liegt ein Teil des Cr(VI) auch in wasserunlöslicher oder wasserschwerlöslicher Form vor, der ebenfalls mit wirtschaftlich vertretbarem Aufwand nicht gewonnen werden kann.

Der Chromerzrückstand kann, je nachdem ob er für den oxidativen alkalischen Aufschluss von Chromerz das High Lime-, No Lime- oder Low Lime-Verfahren, verwendet wurde, in seiner Zusammensetzung, insbesondere dem CaO-Gehalt schwanken. Chromerzrückstände aus dem High Lime-Verfahren, weisen bis zu 35 Gew.-% CaO auf, solche aus dem No Lime-Verfahren gewöhnlich weniger als 5 Gew.-%, während die aus dem Low Lime-Verfahren von 5 bis 35 Gew.-% liegen.

Wenn der Chromerzrückstand in seiner ausgelaugten Form und ohne entsprechende zusätzliche Behandlung deponiert wird - wie es früher oftmals der Fall war - können noch über Jahrzehnte hinweg die schwerlöslichen Cr(VI)-Verbindungen langsam herausgelöst werden und somit Cr(VI) in die Umwelt gelangen. Deshalb sind das Grundwasser und das Erdreich um viele Chromerzrückstands-Deponien herum hochgradig mit Cr(VI) belastet.

Der Chromerzrückstand wird deshalb seit einigen Jahrzehnten in der Regel einem Reduktionsprozess unterworfen, um das noch vorhandene Cr(VI) in unbedenkliches Cr(III) zu überführen, bevor es schließlich deponiert wird. Dabei ist es wichtig, dass eine möglichst vollständige Reduktion des vorhandenen Cr(VI) erreicht wird, wobei auch das nicht an der Oberfläche des Rückstands befindliche, sondern von einer Siliciumdioxid- und/ oder Aluminiumoxid-Schicht eingeschlossene, schwer zugängliche und wasserunlösliche oder wasserschwerlösliche Cr(VI) miterfasst wird.

Dazu ist die Behandlung mit einem chemischen Reduktionsmittel, wie Fe(II)-Sulfat oder Schwefeldioxid, bekannt, wobei letzteres auch in Form von Hydrogensulfit-Ionen eingesetzt werden kann (siehe Ullmann's Encyclopedia of Industrial Chemistry, online Edition, Vol. A9, Seite 165, Wiley-VCH Verlag GmbH Co. KGaA, Weinheim 2012, published online 15. Juni 2000).

In jüngster Zeit ist auch der Einsatz von anderen Reduktionsmitteln oder Mischungen verschiedener Reduktionsmittel für die Behandlung von Chromerzrückständen vorgeschlagen worden. So schlagen Su und Ludwig (Environ Sci. Technol. 2005, 39, 6208-6216) beispielsweise eine Mischung aus Fe(II)-Sulfat und Natriumdithionit (Na₂S₂O₄) vor. Der Vorteil dieser FeSO₄/Na₂S₂O₄-Mischung liegt darin, dass durch Na₂S₂O₄ das Ausfällen von Fe(II)-Ionen verhindert wird und somit eine effektivere Reduktion des Cr(VI) über einen längeren Zeitraum hinweg gewährleistet sein soll. Dennoch konnte bei diesem Verfahren keine vollständige Reduktion des Cr(VI) im Chromerzrückstand erfolgen. Gemäß dem in USEPA (United States Environmental Protection Agency, USEPA) SW-846 Method 3060A beschriebenen alkalischen Aufschlussverfahren nimmt der Cr(VI)-Gehalt von 252 mg/kg auf lediglich 31.4 mg/kg ab.

Auch über den Einsatz von Calciumpolysulfid (CaS₅) beziehungsweise Mischungen aus Fe(II)-Sulfat und Calciumpolysulfid zur Reduktion des Cr(VI)-Gehaltes in Chromerzrückständen ist bereits in der Literatur berichtet worden. So beschreiben zum Beispiel Graham et al. (Science of the total Environment, 2006, 364(1-3), 32-44), Moon et al. (Science of the Total Environment, 2008, 399, 2-10) und Wazne et al. (Geosciences Journal, 2007, 11(2), 105-110) Versuche, bei denen Calciumpolysulfid als Reduktionsmittel eingesetzt wurde. In allen Fällen gelang es jedoch nicht, das Cr(VI) im Chromerzrückstand vollständig zu reduzieren.

Alle diese Verfahren beruhen darauf, dass für die Cr(VI)-Reduktion ein Reduktionsmittel zur Verfügung gestellt wird, welches über einen möglichst langen Zeitraum stabil und somit in der Lage ist, auch das Cr(VI), welches über einem sehr langen Zeitraum erst langsam aus dem Chromerzrückstand freigesetzt wird, zu reduzieren. Da sich jedoch die Freisetzung des Cr(VI) über Jahrzehnte hinziehen kann, darf bezweifelt werden, dass diese Vorschläge wirklich dazu geeignet sind, Cr(VI) im Chromerzrückstand vollständig zu reduzieren. So wird beispielsweise Fe(II) - auch bei sehr niedrigen pH-Werten - langsam an Luft zu Fe(III) oxidiert und steht dann nicht mehr als Reduktionsmittel zur Verfügung.

Die US 2010/0135876 A1 offenbart ein naßchemisches Verfahren zur Reduktion von Cr(VI) in Chromerzrückständen, bei dem Fe(II)-Ionen, welche als Reduktionsmittel wirken, auf der Oberfläche der COPR-Partikel in Form eines schwerlöslichen Niederschlages "fixiert" werden und somit auch in der Lage sein sollen über einen längeren Zeitraum wirksam zu sein. Bei dem offenbarten Verfahren wird zunächst das in der COPR-Matrix enthaltene Cr(VI) aufgelöst, indem eine ausreichende Menge Fe(II)-Sulfat zugesetzt wird. Durch die Fe(II)-Ionen erfolgt auch eine Reduktion des freigesetzten Cr(VI) zu Cr(III). Gleichzeitig fallen Fe(OH)₃ und Al(OH)₃ sowie CaSO₄ aus, was die Auflösung der COPR-Partikel begünstigt. Überschüssiges Fe(II) wird dann in Form eines schwerlöslichen Niederschlages auf der Oberfläche der COPR-Partikel "fixiert". Dies erfolgt vorzugsweise durch Zusatz eines Sulfides, beispielsweise Natriumsulfid (Na₂S), Natriumhydrogensulfid (NaHS) oder Calciumpolysulfid (CaSₓ), wodurch Eisen(II)-Sulfide ausgefällt werden oder durch Zusatz von Phosphorsäure, wodurch Fe(II)-Phosphate ausgefällt werden. Allerdings ist von FeS bekannt, dass es sich bereits in siedendem Wasser zersetzt. Unter den Bedingungen des alkalischen Aufschlussverfahrens gemäß USEPA SW-846 Method 3060A zersetzt sich FeS wieder. Die dabei frei werdenden Fe(II)- und Sulfid-Ionen können nun das noch in der COPR-Matrix gebundene Cr(VI), welches während des alkalischen Aufschlussverfahrens ebenfalls frei wird, reduzieren, sodass ein verfälschtes Ergebnis resultiert, da kein Cr(VI) mehr nachweisbar ist.

Zudem beschreibt die US 2010/0135876 A1 die Erscheinung, dass nach einer Trocknung der lediglich mit Fe(II)-Sulfat reduzierten COPR-Proben mit Hilfe des alkalischen Aufschlussverfahren wieder signifikante Mengen Cr(VI) (ca. 1100 ppm beziehungsweise 1500 ppm) nachgewiesen werden können. Sie führen dies entweder auf eine Rückoxidation von Cr(III) zu Cr(VI) mit Luftsauserstoff oder durch die Oxidation von Fe(II) zu Fe(III) mit Luftsauerstoff zurück. Die US 2010/0135876 A1 zieht jedoch nicht in Betracht, dass die Auflösung des in der COPR-Matrix gebundenen Cr(VI) unvollständig ist.

Cao und Zhang (J. Hazard. Materials B, 2006, B132, 213-219) beschreiben den Einsatz von nanoteiligen Eisenpartikeln (sogenanntes zero valent iron) als Reduktionsmittel. Nachteilig bei diesem Verfahren ist, dass die nanoteiligen Eisenpartikel (< 100 nm, spezifische Oberfläche ca. 35 m²/g) sehr aufwändig in ihrer Herstellung sind und deshalb allenfalls für Laborversuche geeignet sind, derzeit aber nicht für eine Anwendung im großtechnischen Maßstab in Frage kommen. Außerdem werden die nanoteiligen Eisenpartikel durch Luft und/oder Feuchtigkeit langsam oxidiert, so dass bezweifelt werden kann, dass dieses Material über Jahre hinweg in der Lage ist, sechswertiges Chrom in Chromerzrückständen zu reduzieren.

Inzwischen sind auch Anstrengungen unternommen worden, Cr(VI) auf biologischem Wege zu reduzieren. Stellvertretend sei hier nur auf Zhu et al. (World J Microbiol Biotechnol, 2008, 24, 991-996) verwiesen. Sie beschreiben die Verwendung von *Leucobacter* sp. CR1B Bakterien, welche von einer Chromerzrückstands-Deponie in Changsha (Volksrepublik China) isoliert werden konnten. Die Bakterien sind in der Lage gelöstes Cr(VI) zu reduzieren, wobei die Reduktion am besten bei einem neutralen pH-Wert erfolgt. Das Ausbringen und der Einsatz von Bakterien zur Cr(VI)-Reduktion in großem Umfang birgt den Nachteil, dass noch keinerlei Erkenntnisse über die langfristigen Auswirkungen dieser Bakterien im Ökosystem vorliegen. Langzeitstudien dazu stehen noch aus, um abschätzen zu können, ob dieser Weg überhaupt eine praktikable Alternative zur chemischen Reduktion von Cr(VI) in Chromerzrückständen darstellt.

Bereits seit längerer Zeit sind auch thermische Reduktionsverfahren für Chromerzrückstände bekannt. So wird beispielsweise in einigen japanischen Patenten die Verwendung von reduzierten Chromerzrückständen als Schwarz- und Braunpigmente bei der Herstellung von Keramiken (JP62 036061A und JP58-225158A) und Dachziegeln beschrieben (JP59-92968A, JP62 036061A), wobei zum Teil auch noch zusätzlich eine große Menge Koks als Reduktionsmittel der Keramikmasse zugesetzt wird. Beim Brennen laufen nach Angabe der Erfinder die folgenden Reaktionen ab, durch die Cr(VI) in Cr(III) überführt wird.

2 CaO*CrO₃ + 2 SiO₂ → 2 CaO*SiO₂ + Cr₂O₃ + 3/2 O₂ (1)

2 Na₂O*CrO₃ + 2 SiO₂ → 2 Na₂O*SiO₂ + Cr₂O₃ + 3/2 O₂ (2)

In den nach dem Brennen bei mindestens 1200 °C erhaltenen schokoladenfarbenen Keramiken ist offenbar kein Cr(VI) mehr nachweisbar, wobei aber die angewandte Analysenmethode sowie die Atmosphäre, unter der die Keramikkörper gebrannt werden, nicht offenbart werden. Es muss jedoch davon ausgegangen werden, dass unter reduzierenden Bedingungen gearbeitet wurde, weil bei Anwesenheit von Sauerstoff oder Luft und Alkalimetall-Ionen bei entsprechend hoher Temperatur immer eine Rückoxidation von Cr(III) zu Natriumchromat erfolgt.

Wang et al. (Journal of Hazardous Materials, 2007, 149, 440-444) beschreiben die Reduktion des im Chromerzrückstand enthaltenen Cr(VI) mit Saccharose, löslicher Stärke oder Mehl durch Umsetzung unter Inertgas bei höheren Temperaturen. Dabei geben sie an, bei Temperaturen bis 600 °C eine vollständige Umsetzung von Cr(VI) zu Cr(III) zu erhalten. Der Chromerzrückstand, welcher ca. 34% CaO enthält, wird in den beschriebenen Laborversuchen im Mörser pulverisiert und dann mit den entsprechenden Reduktionsmitteln gemischt. Um einen vollständigen und gleichmäßigen Kontakt zwischen den Chromerzrückstands-Partikeln und dem Reduktionsmittel zu gewährleisten, werden diese in einer wässrigen Lösung oder Suspension zugesetzt. Die Reduktion wird in einem Röhrenofen unter Kohlendioxid-Atmosphäre durchgeführt. Es wurde eine systematische Variation der Reaktionszeit, Reaktionstemperatur und der Menge an zugesetztem Reduktionsmittel durchgeführt. Dabei zeigt sich, dass bei 600 °C Reaktionstemperatur ein Massenverhältnis von 2.0 : 1 (Reduktionsmittel: Cr(VI)) erforderlich ist, um bei 20 min Reaktionszeit eine vollständige Reduktion zu erhalten. Auf der Grundlage der beiden folgenden Reaktionsgleichungen - am Beispiel der Saccharose - zeigt sich, dass mit einem 1 Mol Saccharose 16 Mol Cr(VI) reduziert werden können, das heißt für die Reduktion von 1 g Cr(VI) werden theoretisch mindestens 0.41 g Saccharose benötigt:

16 CaCrO₄ + C₁₂H₂₂O₁₁ + 4 CO₂ → 8 Cr₂O₃ + 16 CaCO₃ + 11 H₂O (3)

16 Na₂CrO₄ + C₁₂H₂₂O₁₁ + 4 CO₂ → 8 Cr₂O₃ + 16 Na₂CO₃ + 11 H₂O (4)

Um eine vollständige Reduktion zu erhalten, muss aber anstelle des theoretischen Massenverhältnisses von 0.41 : 1 mindestens ein Massenverhältnis von 2.0 : 1 gewählt werden, d. h. 2.0 g Saccharose für 1 g Cr(VI). Wang et al. geben den Anteil an wasserlöslichem Cr(VI) in dem von ihnen eingesetzten Chromerzrückstand mit 1.07% an. Bei einem Massenverhältnis von 2.0 : 1 (Reduktionsmittel: Cr(VI)) bedeutet dies, dass mindestens 2.14 Gew.-% Reduktionsmittel zugesetzt werden müssen, um eine gemäß Analyseergebnis vollständige Reduktion zu erhalten.

Das von Wang et al. beschriebene Verfahren zur Cr(VI)-Reduktion weist mehrere Nachteile auf. Die erhaltenen Reaktionsprodukte wurden gemäß dem chinesischen Standard GB5086.2-1997 ausgelaugt und gemäß GB/T115555.4-1995 auf Cr(VI) analysiert. GB5086.2-1997 beschreibt lediglich eine Extraktion mit Wasser bei Raumtemperatur. Insofern werden nur die wasserlöslichen Cr(VI)-Anteile erfasst, während die schwer- oder unlöslichen Cr(VI)-haltigen Verbindungen mit diesem Extraktionsverfahren nicht erfasst werden. Das bedeutet, dass die von Wang dargelegten Ergebnisse keine Aussage über den tatsächlichen Erfolg seiner Reduktion von Cr(VI) zu Cr(III) zulassen. James et al. (Environ. Sci. Technol. 1995, 29, 2377-2381) haben die Extraktion von Cr(VI) mit verschiedenen Methoden untersucht und miteinander vergleichen. Dabei zeigt sich klar, dass der Aufschluss von Cr(VI) mit einer Natriumcarbonat/Natriumhydroxid-Mischung (0.28 M Na₂CO₃ und 0.5 M NaOH) bei 90-95°C über einen Zeitraum von 60 Minuten die effektivste Methode ist, alle Arten von Cr(VI) - egal ob wasserlöslich oder schwerlöslich - zu erfassen. Letztere Aufschlussmethode, wie sie in der USEPA (United States Environmental Protection Agency, USEPA) SW-846 Method 3060A beschrieben ist, gilt nach heutigem Kenntnisstand als das empfindlichste Extraktionsverfahren für Cr(VI) in Abfällen und setzt sich deshalb auch als analytisches Standardverfahren zum Aufschluss von Cr(VI) aus Chromerzrückständen immer mehr durch.

Wie eigene Untersuchungen zeigen, sind die von Wang et al. beschriebenen Reaktionsprodukte auch bei 600 °C Reaktionstemperatur und einem Massenverhältnis von 2.0 : 1 (Reduktionsmittel: Cr(VI)), sowie einer Reaktionszeit von 20 min nicht frei von Cr(VI), wenn sie gemäß USEPA SW-846 Method 3060A aufgeschlossen und analysiert werden. Es wird also nur eine vollständige Reduktion vorgetäuscht, weil ein unzureichendes Analyseverfahren angewandt wird. Anbei sei noch erwähnt, dass bei der Pyrolyse von Mehl, Stärke oder Saccharose eine extrem unangenehme Geruchsbelästigung auftritt, welches dieses Reduktionsverfahren zudem benachteiligt.

Zhang et al. (Chemosphere, 2009, 77(8), 1143-45) beschreiben die Reduktion von Cr(VI) im Chromerzrückstand durch Pyrolyse mit Reisstroh. In dieser Veröffentlichung wurden die Reaktionsprodukte gemäß USEPA SW-846 Method 3060A extrahiert. Der für die Versuche eingesetzte Chromerzrückstand enthielt 3400 ppm Cr(VI). Das Reisstroh : Chromerzrückstand-Verhältnis wurde im Bereich von 1 : 10 bis 1 : 2 variiert und die Reaktionstemperatur auf bis zu 600 °C erhöht. Unter keiner der beschriebenen Reaktionsbedingungen konnte ein Cr(VI)-freies Endprodukt erhalten werden. Es enthielt stets mindestens ca. 30 ppm Cr(VI). Vermutlich werden durch die Pyrolyse mit Reisstroh zwar die wasserlöslichen Cr(VI)-Bestandteile reduziert, aber die schwer- oder unlöslichen Cr(VI)-Bestandteile bleiben - zumindest teilweise - als sechswertiges Chrom vorhanden. Zudem werden durch das Stroh Schwefelverbindungen in den Prozess eingeschleppt. Unter den reduzierenden Bedingungen während der Reaktion entstehen Sulfide die im Endprodukt verbleiben. Wenn der reduzierte Chromerzrückstand in einer schwachen Säure suspendiert wird, tritt ein sehr unangenehmer Geruch nach Schwefelwasserstoff (H₂S) auf.

Zhang et al. (Bioresource Technology, 2009, 100(11), 2874-2877) beschreiben auch die Reduktion des im Chromerzrückstand enthaltenen Cr(VI) mit Klärschlämmen über eine Pyrolyse. Dabei wird der Klärschlamm im Verhältnis 1 : 10 mit Chromerzrückstand gemischt und anschließend einer Pyrolyse bei 600 °C unterworfen. Der Aufschluss des Cr(VI) erfolgt ebenfalls gemäß dem in USEPA SW-846 Method 3060A beschriebenen alkalischen Aufschlussverfahren. Auch bei diesem Verfahren kann der Cr(VI)-Gehalt von ursprünglich 3384 ppm für den unbehandelten Chromerzrückstand auf nur 24 ppm gesenkt werden. Die Pyrolyse von Chromerzrückstand mit Klärschlämmen, so wie von Zhang beschrieben, ist demnach kein geeignetes Verfahren, um Cr(VI)-freien Chromerzrückstand zu erhalten. Des Weiteren werden auch hier über die Klärschlämme Schwefelverbindungen in den Prozess eingeschleppt, die wie oben beschrieben den unangenehmen Geruch nach Schwefelwasserstoff (H₂S) entstehen lassen können.

Die US 2004/0086438 A1 offenbart ein Verfahren, durch welches das im Chromerzrückstand vorhandene Chrom und das Eisen gleichzeitig zurück gewonnen werden können. Dabei wird der Chromerzrückstand zuerst mit mindestens 20 Gew.-% eines Metallhydroxides, vorzugsweise Natrium- oder Kalium- oder Lithiumhydroxid, bei mindestens 350°C für mindestens 10 Minuten an Luft behandelt. Dem schließt sich eine saure Aufarbeitung an, die zu einem eisenreichen unlöslichen Rückstand führt. Weitere Nachteile sind die benötigten geschmolzenen Metallhydroxide, die sehr korrosiv und extrem schwierig zu handhaben sind. Die Übertragung dieses Verfahren in einen großtechnischen Maßstab bringt deshalb erhebliche Probleme mit sich. Entsprechend wird in fast allen offenbarten Beispielen lediglich 1 g Chromerzrückstand in kleinen Laborexperimenten umgesetzt. Lediglich in einem Beispiel wird ein 100 g-Ansatz in einem Drehrohrofen beschrieben, wobei allerdings nicht erwähnt wird, wie dieser betrieben wird. Ein weiterer gravierender Nachteil des Verfahrens ist, dass große Mengen Hydroxide und Säuren zugesetzt werden, so dass große Mengen an gelösten Salzen anfallen. Die Salzfracht in den Prozesswässern ist also sehr groß. Zudem ist das Verfahren auf eine große Menge von Calciumoxid angewiesen, da das Calcium zum Ausfällen von Sulfat als Calciumsulfat benötigt wird. Die Nachteile des Calciumoxid-Zusatzes wurden bereits erwähnt.

Aufgabe der vorliegenden Erfindung war es, ein wirtschaftlich nutzbares Verfahren bereitzustellen, mit dem das in einem oxidischen Feststoff enthaltene sechswertige Chrom soweit reduziert wird, dass im erhaltenen Endprodukt gemäß einem hier offenbarten, modifizierten alkalischen Aufschlussverfahren I in Anlehnung an USEPA SW-846 Method 3060A kein Cr(VI) mehr nachgewiesen werden kann (Anteil an Cr(VI) laut Analyseverfahren I < 640 ppb). Wird der Cr(VI)-Gehalt gemäß einer hier offenbarten, weiter modifizierten Form dieses alkalischen Aufschlußverfahrens ermittelt (modifiziertes alkalisches Aufschlussverfahren II), kann der Cr(VI)-Gehalt sogar zu < 107 ppb bestimmt werden.

Der Nutzen aus dem erfindungsgemäßen Verfahren ist, dass der erhaltene reduzierte oxidische Feststoff, insbesondere der Chromerzrückstand, nicht mehr länger als Gefahrstoff betrachtet und deponiert werden muss, sondern als Wertstoff in eine neue Wertschöpfungskette eingebracht werden kann.

Überraschenderweise konnte gefunden werden, dass in einem thermischen Reduktionsverfahren, bei welchem kohlenstoffhaltige, im Bereich von 20 bis 100 °C flüssige Verbindungen eingesetzt werden, die laut Analyseverfahren vollständige Reduktion von sechswertigem Chrom in oxidischen Feststoffen, enthaltend Cr(VI), vorzugsweise Chromerzrückständen, in ganz vorzüglicher Weise gelingt.

Die Erfindung betrifft daher ein Verfahren zur Reduktion von sechswertigem Chrom in oxidischen Feststoffen, enthaltend die Schritte:
a) Mischen des oxidischen Feststoffes, enthaltend Cr(VI), mit einer kohlenstoffhaltigen, im Bereich von 20 bis 100 °C flüssigen Verbindung,
b) Behandeln der nach a) erhaltenen Mischung unter Schutzatmosphäre in einem indirekt beheizten Reaktor bei einer Temperatur von 700 °C bis 1100 °C, besonders bevorzugt bei einer Temperatur von 800 °C bis 1000 °C,
c) Abkühlen des nach b) erhaltenen Reaktionsproduktes unter Schutzatmosphäre auf wenigstens 300 °C, vorzugsweise auf wenigstens 150°C,
wobei als kohlenstoffhaltige Verbindung eine Polyhydroxyverbindung, bevorzugt Glycerin oder ein flüssiges Polyethylenglykol, besonders bevorzugt Polyethylenglykol mit einer Molmasse von bis zu 600, eingesetzt wird, und
sich die kohlenstoffhaltige Verbindung bevorzugt bei Temperaturen > 150 °C zersetzt anstatt zu verdampfen.

### Schritt a)

Für das erfindungsgemäße Verfahren können grundsätzlich alle Arten von oxidischen Feststoffen, enthaltend sechswertiges Chrom, eingesetzt werden. Vorzugsweise werden Chromerzrückstände eingesetzt, die beim oxidativen alkalischen Aufschluss von Chromerzen, beispielsweise Chromit für die Herstellung von Natriummonochromat, anfallen. Bevorzugt werden auch sonstige Rückstände, Cr(VI) enthaltend, eingesetzt, wie sie beispielsweise aus der Auf- und Weiterverarbeitung von Natriummonochromat anfallen, wobei als sonstiger Rückstand, Cr(VI) enthaltend, besonders bevorzugt Calciumvanadat, das bei der Abtrennung von Vanadium aus der Monochromat-Lösung entsteht, eingesetzt wird. Es können auch Mischungen von oxidischen Feststoffen eingesetzt werden. Vorzugsweise enthält eine solche Mischung Chromerzrückstände und sonstige Rückstände, Cr(VI) enthaltend, wie sie beispielsweise aus der Auf- und Weiterverarbeitung von Natriummonochromat anfallen, wobei als sonstiger Rückstand, Cr(VI) enthaltend, besonders bevorzugt Calciumvanadat, das bei der Abtrennung von Vanadium aus der Monochromat-Lösung entsteht, eingesetzt wird. Die oxidischen Feststoffe können weitere Metalloxide wie Chrom(III)oxid, Aluminiumoxid, Eisen(II)oxid, Eisen(II,III)oxid, Eisen(III)oxid, Spinell-Mischphasen, Magnesiumoxid, Calciumoxid, Siliciumdioxid und Natriumoxid enthalten.

Die oxidischen Feststoffe enthalten vorzugsweise einen Cr(VI)-Gehalt von bis zu 80000 ppm, besonders bevorzugt von bis zu 50000 ppm, ermittelt gemäß dem modifizierten alkalischen Aufschlussverfahren I in Anlehnung an USEPA SW-846 Method 3060A. Sie können als Wasser enthaltende Filterkuchen dem Schritt a) zugeführt werden. In einer bevorzugten Ausführungsform des erfindungsgemäßen Verfahrens werden sie jedoch in getrockneter Form eingesetzt. Besonders bevorzugt weisen sie einen Feuchtegehalt von max. 2.0 Gew.-%, ganz besonders bevorzugt von weniger als 1.0 Gew.-%, auf. Der CaO-Gehalt des oxidischen Feststoffes ist nicht erfindungswesentlich und beträgt bevorzugt weniger als 15 Gew.-%, ganz besonders bevorzugt weniger als 10 Gew.-%, insbesondere weniger als 5 Gew.-%. Bevorzugt werden oxidische Feststoffe mit einem Gew.-%-Gehalt an Chrom(III)oxid von 8 bis 10, an Aluminiumoxid von 22 bis 24, an Eisen(III)oxid von 44 bis 47, an Siliciumdioxid von 1 bis 3, an Natriumoxid von 3 bis 5 eingesetzt. Die oxidischen Feststoffe weisen vorzugsweise einen sehr geringen Schwefel-Gehalt auf, insbesondere weniger als 300 ppm, besonders bevorzugt weniger als 200 ppm, ganz besonders bevorzugt weniger als 100 ppm. Chromerzrückstände, die besonders bevorzugten oxidischen Feststoffe, enthalten vorzugsweise bis zu 10000 ppm Cr(VI) und einen Vanadium-Gehalt von weniger als 0.5 Gew.-%. Die Chromerzrückstände fallen im Produktionsprozess von Natriummonochromat nach Fest-Flüssig-Separation üblicherweise als feuchte Filterkuchen an, die so dem Schritt a) zugeführt werden können. Sonstige Rückstände, Cr(VI) enthaltend, werden bevorzugt mit einem Vanadium-Gehalt von 12 bis 15 Gew.-% eingesetzt. Mischungen aus Chromerzrückstand und Vanadat-haltigem sonstigen Rückstand enthalten bevorzugt bis zu 20000 ppm Cr(VI). Mischungen von oxidischen Feststoffen enthalten vorzugsweise mindestens 85 Gew.-% an Chromerzrückständen, besonders bevorzugt mindestens 90 Gew.-% an Chromerzrückständen.

Für das erfindungsgemäße Verfahren werden vorzugsweise oxidische Feststoffe eingesetzt, bei denen mindestens 90% der Partikel kleiner als 500 µm sind, ganz besonders bevorzugt kleiner als 300 µm. Dies kann - falls erforderlich - durch eine dem Schritt a) vorgeschaltete Siebung und/oder Mahlung erreicht werden.

Unter der im Folgenden als kohlenstoffhaltige, im Bereich von 20 bis 100 °C flüssige Verbindung bezeichneten Substanz wird im Sinne dieses Verfahrens verstanden, dass sie innerhalb des gesamten Temperaturbereiches von 20 bis 100 °C als Flüssigkeit vorliegt oder ihren Schmelzpunkt in dem Bereich von 20 bis 100 °C besitzt und sich beim Erhitzen zersetzt, bevorzugt bei Temperaturen > 150 °C, anstatt zu verdampfen. Die thermische Zersetzung kann als Pyrolyse angesehen werden, da sich die kohlenstoffhaltige Verbindung, bedingt durch den Bruch chemischer Bindungen, zersetzt.

Im Schritt a) kann nur eine kohlenstoffhaltige, im Bereich von 20 bis 100 °C flüssige Verbindung oder auch eine Mischung aus mehreren kohlenstoffhaltigen, im Bereich von 20 bis 100 °C flüssigen Verbindungen eingesetzt werden. Als kohlenstoffhaltige, im Bereich von 20 bis 100 °C flüssige Verbindungen werden Polyhydroxyverbindungen eingesetzt, bevorzugt Glycerin oder ein flüssiges Polyethylenglykol, insbesondere ein Polyethylenglykol mit einer Molmasse von bis zu 600. Diese Verbindungen sind in sehr hoher Reinheit erhältlich, wodurch kein Schwefel in den Reduktionsprozess eingeschleppt wird, sodass, auch wenn der reduzierte Chromerzrückstand in einer Säure suspendiert wird, kein Geruch nach Schwefelwasserstoff auftritt.

Die Menge der kohlenstoffhaltigen, im Bereich von 20 bis 100 °C flüssigen Verbindung, die mit dem oxidischen Feststoff, insbesondere mit dem Chromerzrückstand, vermischt wird, richtet sich nach dem Cr(VI)-Gehalt des oxidischen Feststoffes und der Art der eingesetzten kohlenstoffhaltigen, im Bereich von 20 bis 100 °C flüssigen Verbindung. Es sollte jedoch sichergestellt sein, dass ein ausreichender Überschuss der kohlenstoffhaltigen Verbindung vorhanden ist, um eine vollständige Reduktion des Cr(VI) zu gewährleisten. Geht man beispielsweise für Reduktion von Cr(VI) mit Glycerin von der nachfolgenden Reaktionsgleichung aus,

14 Na₂CrO₄ + 3 C₃H₈O₃ + 5 CO₂ → 7 Cr₂O₃ + 14 Na₂CO₃ + 12 H₂O (5)

so erkennt man, dass mit 3 Mol Glycerin 14 Mol Cr(VI) reduziert werden können, das heißt für die Reduktion von 1 g Cr(VI) werden theoretisch mindestens 0.38 g Glycerin benötigt. Um eine vollständige Reduktion des Cr(VI) auch in den wasserunlöslichen und wasserschwerlöslichen Verbindungen sicherzustellen, sollte aber anstelle des theoretischen Massenverhältnisses von 0.38 : 1 ein Massenverhältnis von mindestens 4 : 1 gewählt werden, d. h. 4.0 g Glycerin für die Reduktion von 1 g Cr(VI) eingesetzt werden. Ganz besonders bevorzugt wird ein Massenverhältnis im Bereich von 4 : 1 bis 15 : 1 gewählt (Masse von Glycerin : Masse von Cr(VI) im oxidischen Feststoff). Dieses Massenverhältnis wird auch bei dem Einsatz von Polyethylenglykol mit einer Molmasse von 380 bis 420 angewendet. Bei Einsatz anderer kohlenstoffhaltiger, im Bereich von 20 bis 100 °C flüssiger Verbindungen ist das Massenverhältnis von einzusetzender kohlenstoffhaltiger, im Bereich von 20 bis 100 °C flüssiger Verbindung zu Masse von Cr(VI) auf analoge Weise zu ermitteln.

Die kohlenstoffhaltige, im Bereich von 20 bis 100 °C flüssige Verbindung wird im allgemeinen in einer Menge von 0.5 Gew.-% bis 5.0 Gew.-%, besonders bevorzugt von 0.75 Gew.-% bis 2.5 Gew.-%, bezogen auf die Masse von getrocknetem oxidischen Feststoff, enthaltend Cr(VI), eingesetzt.

Ebenfalls bevorzugt ist es, die Menge der kohlenstoffhaltigen, im Bereich von 20 bis 100 °C flüssigen Verbindung und der Menge der zu reduzierenden Cr(VI)-haltigen Verbindung so zu wählen, dass das molare Verhältnis der Kohlenstoffatome ersterer Verbindung zu den zu reduzierenden Chrom(VI)-Atomen letzterer Verbindung 5 : 1 bis 35 : 1 beträgt. Für Glycerin oder Polyethylenglykol mit einer Molmasse von 380 bis 420 als Reduktionsmittel ist besonders bevorzugt ein molares Verhältnis von Kohlenstoff zu Cr(VI) von 9 : 1 bis 23 : 1 zu wählen.

Das Mischen von oxidischem Feststoff mit einer kohlenstoffhaltigen, im Bereich von 20 bis 100 °C flüssigen Verbindung kann bei Raumtemperatur oder bei erhöhter Temperatur, vorzugsweise bis 100 °C erfolgen.

Im Schritt a) wird der oxidische Feststoff mit einer kohlenstoffhaltigen, im Bereich von 20 bis 100 °C flüssigen Verbindung gemischt, sodass die oxidischen Feststoff-Partikel mit letzterer benetzt werden. Der Fachmann kennt eine Vielzahl von kontinuierlich und diskontinuierlich arbeitenden Mischern, mit denen ein Feststoff und eine Flüssigkeit gemischt werden können, um benetzte Partikel zu erhalten. Bevorzugt erfolgt das Mischen von oxidischem Feststoff mit einer kohlenstoffhaltigen, im Bereich von 20 bis 100 °C flüssigen Verbindung, um benetzte oxidische Feststoff-Partikel zu erhalten, in einem kontinuierlich arbeitenden Mischaggregat.
Chromerzrückstände können aufgrund ihres Feinanteils zum Stauben neigen. Die nach dem Mischen mit der kohlenstoffhaltigen, im Bereich von 20 bis 100 °C flüssigen Verbindung erhaltenen benetzten oxidischen Feststoff-Partikel zeigen nahezu keine Staubneigung mehr, was aus Gründen der Arbeitssicherheit und Arbeitshygiene vorteilhaft und wünschenswert ist.

Dem oxidischen Feststoff können im Schritt a) außer der kohlenstoffhaltigen, im Bereich von 20 bis 100 °C flüssigen Verbindung noch weitere die Verarbeitbarkeit der hergestellten Mischung fördernde Hilfsmittel zugesetzt werden.

Als Beispiel für ein die Verarbeitbarkeit der hergestellten Mischung förderndes Hilfsmittel kann pyrogene Kieselsäure angesehen werden, die unter dem Handelsnamen Aerosil® (Handelsprodukte der Evonik Industries AG) kommerziell erhältlich sind und als Fließhilfsmittel wirken. Es können aber auch andere Silikate oder Aluminate oder Alumosilikate zugesetzt werden.

### Schritt b)

Die aus dem Schritt a) erhaltene Mischung wird einer thermischen Reduktion zugeführt, bei der das sechswertige Chrom reduziert wird.

Das Erhitzen des sechswertigen Chroms wird unter einer Schutzatmosphäre durchgeführt, vorzugsweise bestehend aus den Edelgasen, insbesondere Helium oder Argon, Stickstoff und/ oder Kohlendioxid, wobei letzteres besonders bevorzugt ist.

Die thermische Reduktion findet bei einer Temperatur von 700 °C bis 1100 °C, bevorzugt bei einer Temperatur von 800 °C bis 1000 °C, statt.

Die thermische Reduktion im Schritt b) kann in einem kontinuierlich arbeitenden oder diskontinuierlich arbeitenden indirekt beheizten Reaktor erfolgen, wobei kontinuierlich arbeitende indirekt beheizte Reaktoren besonders bevorzugt sind. Ein Beispiel dafür sind gas- oder elektrisch indirekt beheizte Drehrohröfen.

Die Verwendung von indirekt beheizten Reaktoren hat außerdem den Vorteil, dass im Reaktionsraum selbst nur eine sehr geringe Gasströmung vorherrscht, wodurch kaum Staub ausgetragen wird. Dies wird zusätzlich noch durch die relativ geringe zugesetzte Menge der kohlenstoffhaltigen, im Bereich von 20 bis 100 °C flüssigen Verbindung begünstigt. Dadurch entstehen bei der thermischen Reduktion nur sehr geringe Mengen an Abgas.

Während des Aufheizens unterliegt die kohlenstoffhaltige, im Bereich von 20 bis 100 °C flüssige Verbindung einer Pyrolyse, durch die chemische Bindungen gespalten werden und reaktionsfähige Radikale oder reaktive Zwischenstufen entstehen, die das sechswertige Chrom reduzieren. Aus diesem Grunde ist es vorteilhaft, dass im Schritt a) eine homogene und gleichmäßige Benetzung der oxidischen Feststoff-Partikel erreicht wurde, weil dann die reaktionsfähigen Radikale oder reaktive Zwischenstufen auf der gesamten Oberfläche des oxidischen Feststoff-Partikels gebildet werden.

### Schritt c)

Das nach der thermischen Reduktion erhaltene und dem Schritt c) zugeführte Reaktionsprodukt muss von seiner ursprünglichen Reaktionstemperatur abgekühlt werden.

Das Abkühlen des unter b) erhaltenen Reaktionsproduktes erfolgt zumindest bis auf eine Temperatur von wenigstens 300 °C, besonders bevorzugt von wenigstens 150 °C, unter einer Schutzatmosphäre, vorzugsweise bestehend aus den Edelgasen, insbesondere Helium oder Argon, Stickstoff und/ oder Kohlendioxid, wobei letzteres besonders bevorzugt ist. Die nachfolgende Abkühlung, insbesondere bis auf Raumtemperatur, kann danach in Gegenwart von Luft erfolgen. So kann eine Rückoxidation von Cr(III) zu Cr(VI) wirksam vermieden werden, wie Untersuchungen gezeigt haben.

Das Abkühlen des erhaltenen Reaktionsproduktes im Schritt c) erfolgt in einem kontinuierlich arbeitenden oder diskontinuierlich arbeitenden Kühlaggregat, wobei es vorzugsweise in einem kontinuierlich arbeitenden Kühlaggregat erfolgt. Als Beispiele für kontinuierlich arbeitende Kühlaggregate seien hier nur Festbettwärmetauscher, Schneckenwärmetauscher (Kühlschnecken) oder Kühltrommeln erwähnt.

Grundsätzlich ist es auch möglich, das aus dem Schritt b) erhaltene Reaktionsprodukt in Wasser abzuschrecken. Dies ermöglicht eine rasche und einfache Abkühlung. Nachteilig ist in diesem Fall jedoch, dass das Reaktionsprodukt als wässrige Suspension anfällt, die erst weiter aufgearbeitet werden muss, beispielsweise über eine Fest-/Flüssig-Trennung und anschließende Trocknung. Dies ist aus energetischer Sicht wenig sinnvoll, weil das aus dem Schritt b) erhaltene Reaktionsprodukt bereits trocken ist und so direkt weiter verarbeitet werden kann. Bevorzugt ist jedoch die Abkühlung gemäß Schritt c) unter einer Schutzgasatmosphäre durchzuführen.

Das nach dem Schritt c) erhaltene abgekühlte Reaktionsprodukt kann gegebenenfalls noch einer Siebung und/oder Mahlung unterzogen werden.

Der Cr(VI)-Gehalt des nach dem Schritt c) erhaltenen abgekühlten Reaktionsproduktes wird gemäß dem offenbarten modifizierten alkalischen Aufschlussverfahren I und/oder II ermittelt.

Nach Schritt c) wird ein reduzierter oxidischer Feststoff erhalten. Bevorzugt wird ein reduzierter oxidischer Feststoff erhalten, der dadurch gekennzeichnet ist, dass er einen Anteil von weniger als 15 Gew.-% Calciumoxid enthält, besonders bevorzugt weniger als 10 Gew.-% Calciumoxid, ganz besonders bevorzugt weniger als 5 Gew.-% Calciumoxid.

Die Erfindung umfasst auch die Verwendung des nach dem erfindungsgemäßen Verfahren hergestellten reduzierten oxidischen Feststoffes als Füllstoff bei der Herstellung von kalk- und/oder zementgebundenen Baustoffen oder von Asphalt. Er kann auch zur Herstellung von Stahl oder anderen Legierungen verwendet werden.

Des Weiteren umfasst die Erfindung kalk- oder zementgebundene Baustoffe oder Asphalt, enthaltend den reduzierten oxidischen Feststoff.

Eine Kombination des nach Schritt c) erhaltenen reduzierten oxidischen Feststoffes mit einer Mischung enthaltend Zement und Zuschlagsstoffe, inbesondere Sand, für die Herstellung von Ziegeln und Pflastersteinen, zeigte positive Effekte. In einer typischen Mischung enthaltend Zement und Sand, wie sie für die Herstellung von Ziegeln oder Pflastersteinen verwendet wird, liegen Zement und Sand im Verhältnis 1:4 bis 1:12, bevorzugt 1:7 bis 1:9 vor. Es konnte gezeigt werden, dass sich durch eine Kombination des reduzierten oxidischen Feststoffs mit einer Mischung enthaltend Zement und Sand, der Abrieb sowie die Wasseraufnahme der aus dieser Mischung hergestellten Ziegel und Pflastersteine deutlich verringerten, wenn ein Teil des Zementes durch den nach Schritt c) erhaltenen reduzierten oxidischen Feststoff ersetzt werden. Durch eine Verringerung des Abriebs und der Wasseraufnahme sind die Ziegel und Pflastersteine widerstandsfähiger.

In einer bevorzugten Ausführungsform werden in zementgebundenen Baustoffen bis zu 50% des Zements, besonders bevorzugt bis zu 30% des Zements in einer Mischung von Zement und Sand im Verhältnis 1:4 bis 1:12, bevorzugt 1:7 bis 1:9, durch den nach Schritt c) erhaltenen reduzierten oxidischen Feststoff ersetzt.

### Beispiele

### 1. Bestimmung des Cr(VI)-Gehaltes

### Beschreibung der verwendeten Testmethoden:

### Modifiziertes alkalisches Aufschlussverfahren I:

Die Ermittlung des Cr(VI)-Gehaltes der als Ausgangsmaterialien eingesetzten oxidischen Feststoffe wie auch der erhaltenen Reaktionsprodukte wurde in Anlehnung an das in USEPA SW-846 Method 3060A beschriebene alkalische Aufschlussverfahren durchgeführt.

Für den Fall, dass der oxidische Feststoff mehr als 2 Gew.-% Wasser enthält, wird er bis zur Gewichtskonsistenz bei 120 °C getrocknet und danach eingewogen. Im Gegensatz zu dem in USEPA SW-846 Method 3060A beschriebenen Verfahren werden allerdings nicht 2.4 g bis 2.6 g der zu untersuchenden Probe aufgeschlossen, sondern es werden zwischen 9.9 g und 10.1 g (Wägegenauigkeit 0.0001 g) des oxidischen Feststoffes quantitativ in einen Reaktionskolben mit Schutzgasanschluss überführt. Dann werden 50 ml der alkalischen Aufschlusslösung (hergestellt durch Auflösen von 20.0 g NaOH (0.5 M) und 29.7 g Na₂CO₃ (0.28 M) in 1.00 1 demineralisiertem Wasser), 2 ml einer Mg(NO₃)₂-Lösung (hergestellt durch Auflösen 60.0 g Mg(NO₃)₂*6 H₂O in 1.001 demineralisiertem Wasser) und 0.5 ml einer Pufferlösung mit pH = 7 zugesetzt. Die Suspension wird mit Stickstoff-Schutzgas beschleiert, unter Rühren bis zum Sieden erhitzt und eine Stunde lang unter Rückfluss erhitzt, wobei eine kontinuierliche Beschleierung mit Stickstoff-Schutzgas erfolgt. Nach einer Stunde wird die Suspension unter Rühren auf Raumtemperatur abgekühlt, wobei die Beschleierung mit Stickstoff aufrechterhalten wird. Anschließend wird an Luft filtriert und der Filterkuchen intensiv mit demineralisiertem Wasser gewaschen. Die bei der Filtration und Wäsche erhaltene Mutterlauge und Waschwässer werden in einem 500 ml-Maßkolben vereinigt, bis zum Eichstrich mit demineralisiertem Wasser aufgefüllt und wie unten beschrieben auf Cr(VI) analysiert. Im Gegensatz zu dem in USEPA SW-846 Method 3060A beschriebenen Verfahren wird also eine deutlich größere Probenmenge eingesetzt, aber schließlich wird der alkalische Extrakt im Maßkolben auf 500 ml aufgefüllt, anstatt auf 250 ml. Trotzdem resultiert aus dem oben beschriebenen Verfahren eine doppelt so hohe Cr(VI)-Konzentration in der Maßlösung, die für die Cr(VI)-Bestimmung über UV/VIS-Spektroskopie eingesetzt wird, im Vergleich zu dem in USEPA SW-846 Method 3060A beschriebenen Verfahren.

### Modifiziertes alkalisches Aufschlussverfahren II:

Die nach dem erfindungsgemäßen Verfahren erhaltenen reduzierten oxidischen Feststoffe enthalten nur noch sehr geringe Mengen Cr(VI), die so gering sind, dass sie im alkalischen Extrakt, der nach dem oben beschriebenen Verfahren erhalten wird, nicht quantifiziert werden können. Um die Empfindlichkeit der Cr(VI)-Bestimmung im reduziertem oxidischen Feststoff weiter zu steigern, wurden die reduzierten oxidischen Feststoff-Proben, wie sie aus dem erfindungsgemäßen Verfahren erhalten wurden, zusätzlich noch einem modifizierten alkalischen Aufschlussverfahren II unterworfen. Dabei wurden 29.9 g bis 30.1 g (Wägegenauigkeit 0.0001 g) des oxidischen Feststoffs eingesetzt und wie oben beschrieben extrahiert. Die nach Filtration und Wäsche erhaltenen Mutterlauge und Waschwässer werden in einem 250 ml-Maßkolben vereinigt und bis zum Eichstrich mit demineralisiertem Wasser aufgefüllt. Bei diesem modifizierten alkalischen Aufschlussverfahren II wird also ein alkalischer Extrakt erhalten, der im Vergleich zu dem in USEPA SW-846 Method 3060A beschriebenen Verfahren, eine zwölffach höhere Cr(VI)-Konzentration aufweist. Die Chrom(VI)-Analytik erfolgt wie unten beschrieben.

### UV/Vis-Spektroskopie zur Ermittlung des Chrom(VI)-Gehaltes:

Dem aus dem modifizierten alkalischen Aufschlussverfahren I oder II erhaltenen Maßkolben mit dem alkalischen Extrakt wird eine kleine Menge der klaren Lösung abgenommen und mit verdünnter Salzsäure auf einen pH-Wert von 7 eingestellt. Dabei entsteht in der Regel ein Niederschlag von Aluminium- und Siliciumhydroxiden, der abzentrifugiert wird. Das erhaltene klare Zentrifugat wird noch durch einen 0.45 µm-Spritzenfilter filtriert und ihr Cr(VI)-Gehalt nach Einstellung des pH-Wertes als 1,5-Diphenylcarbazid-Komplex mittels UV/Vis-Spektroksopie bestimmt, wie es USEPA Method 218.7 beschrieben ist. Die gemessene Cr(VI)-Konzentration wird - sofern sie quantifiziert werden kann - unter Berücksichtigung der durch die pH-Einstellung mit der verdünnten Salzsäure entstandenen Verdünnung auf die Masse der ursprünglich eingesetzten oxidischen Feststoffmenge zurückgerechnet.

Die Bestimmung des Cr(VI)-Gehaltes erfolgte auf einem automatisierten UV/Vis-Spektrometer vom Typ Metrohm 844 UV/VIS Compact IC bei einer Wellenlänge von 539 nm. Bei diesem Gerät wird das Monochromat zunächst von anderen Anionen über eine Anionenaustauschersäule abgetrennt, bevor es in einem Nachsäulenreaktor mit 1,5-Diphenylcarbazid umgesetzt und spektrophotometrisch bestimmt wird. Bei dem verwendeten Gerät liegt die Cr(VI)-Bestimmungsgrenze bei 0.0128 mg/l Cr(VI). Unter Berücksichtigung von 10 g getrocknetem oxidischen Feststoff, welcher für das oben beschriebene alkalische Aufschlussverfahren I eingesetzt wird, ergibt sich eine Bestimmungsgrenze von 0.64 mg Cr(VI) pro kg oxidischem Feststoff, was 640 ppb Cr(VI) entspricht. Unter Berücksichtigung von 30 g getrocknetem oxidischen Feststoff, welcher für das oben beschriebene modifizierte alkalische Aufschlussverfahren I eingesetzt wird, ergibt sich eine Bestimmungsgrenze von 0.107 mg Cr(VI) pro kg oxidischem Feststoff, was 107 ppb Cr(VI) entspricht.

### Beispiele 1-6

Anhand der nachfolgenden Beispiele wird die Erfindung näher erläutet, ohne dass dadurch eine Einschränkung der Erfindung bewirkt werden soll.

Für die nachfolgenden Beispiele wurde Chromerzrückstand aus dem industriellen Herstellungsprozess von Natriummonochromat ausgehend von Chromit über einen oxidativen alkalischen Aufschluss mit Natriumcarbonat (sogenanntes No Lime-Verfahren, CaO-Gehalt < 5 Gew.-%) eingesetzt. Der im Produktionsprozess von Natriummonochromat nach Fest-Flüssig-Separation in Form eines feuchten Filterkuchens angefallene Chromerzrückstand wurde lediglich getrocknet, aber nicht gesiebt oder gemahlen. Die Zusammensetzung des getrockneten Chromerzrückstandes kann der nachfolgenden Tabelle 1 entnommen werden.

### Allgemeine Durchführung

Getrockneter Chromerzrückstand, dessen Cr(VI)-Gehalt nach dem oben beschriebenen modifizierten alkalischen Aufschlussverfahren I ermittelt wurde, wurde mit einer kohlenstoffhaltigen, im Bereich von 20 bis 100 °C flüssigen Verbindung (Glycerin oder PEG mit einer Molmasse von 380 bis 420) gemischt, um benetzte Chromerzrückstands-Partikel zu erhalten. Diese Mischung wurde in einen elektrisch indirekt beheizten Drehrohrofen eingetragen. Das Ofenrohr hatte eine Gesamtlänge von 1.5 m, wovon 1.1 m beheizt waren. Der Rohrdurchmesser betrug 0.3 m und der Ofen wurde mit einer bestimmten Drehgeschwindigkeit betrieben. Im Ofen herrschte eine bestimmte Reaktionstemperatur sowie eine Schutzatmosphäre aus Kohlendioxid. Das erhaltene Produkt wurde unter Kohlendioxid-Atmosphäre auf wenigstens 150 °C abgekühlt.

Nach Abkühlung wurde das schwarze reduzierte Chromerzrückstands-Reaktionsprodukt entnommen, über ein 300 µm-Sieb abgesiebt und ca. 10 g des Feinanteiles gemäß dem oben beschriebenen alkalischen Aufschlussverfahren I aufgearbeitet und der Cr(VI)-Gehalt im alkalischen Extrakt mittels UV/Vis-Spektroskopie bestimmt. Er lag unterhalb der Bestimmungsgrenze von 640 ppb. Der Cr(VI)-Gehalt lag selbst dann noch unter der Bestimmungsgrenze, wenn das reduzierte Chromerzrückstands-Reaktionsprodukt gemäß dem oben beschriebenen modifizierten alkalischen Aufschlussverfahren II aufgearbeitet wurde. Der Cr(VI)-Gehalt im reduzierten Chromerzrückstands-Reaktionsprodukt lag also bei unter 107 ppb Cr(VI). Der erhaltene reduzierte Chromerzrückstand enthielt also kein auf diese Weise nachweisbares Cr(VI) mehr.

Beispiel 6 erfolgte gemäß der oben beschriebenen allgemeinen Durchführung, mit der Ergänzung, dass dem getrockneten Chromerzrückstand ein getrockneter Cr(VI)-haltiger Calciumvanadat-Filterkuchen, entstanden bei der Abtrennung von Vanadat aus einer Natriummonochromat-Lösung, beigefügt wurde (3.5 Gew.% bezogen auf den getrockneten Chromerzrückstand, Vanadium-Gehalt 13.80 Gew.-%, Cr(VI)-Gehalt 6.46 Gew.-%) und die Mischung wie oben beschrieben mit einer kohlenstoffhaltigen, im Bereich von 20 bis 100 °C flüssigen Verbindung gemischt wurde.

Tabelle 1 gibt die Reaktionsparameter von sechs auf oben beschriebene Weise durchgeführten Reaktionsbeispielen wieder. Zudem ist die Zusammensetzung des in den einzelnen Beispielen eingesetzten getrockneten Chromerzrückstandes aufgeführt (gerechnet als Metalloxide, skaliert auf 100%). Polyethylenglykol mit einer Molmasse von 380 bis 420 wird in der Tabelle 1 als PEG-400 bezeichnet.

**Tabelle 1**

| Beispiel | 1 | 2 | 3 | 4 | 5 | 6 |
|---|---|---|---|---|---|---|
| Kohlenstoffhaltige, im Bereich von 20 bis 100 °C flüssige Verbindung, dessen Anteil, bezogen auf die Masse an getrocknetem Chromerzrückstand [Gew.-%] | PEG-400, 1.0 | Glycerin, 1.5 | PEG-400, 1.5 | Glycerin, 1.0 | PEG-400, 0.75 | PEG-400, 1.5 |
| Massenverhältnis kohlenstoffhaltige, im Bereich von 20 bis 100 °C flüssige Verbindung : Cr(VI) | 8.9:1.0 | 13.3:1.0 | 9.4:1.0 | 10.3:1.0 | 8.8:1.0 | 4.2:1.0 |
| Molares Verhältnis Kohlenstoff (der kohlenstoffhaltigen, im Bereich von 20 bis 100 °C flüssigen Verbindung) : Cr (VI) | 20.73 | 22.51 | 22.02 | 17.37 | 20.65 | 9.85 |
| Eintragsgeschwindigkeit in den Reaktor [kg/h] | 17.6 | 13.8 | 11.2 | 25.7 | 10.3 | 20.0 |
| Drehgeschwindigkeit [U/min] | 3 | 3 | 2 | 3 | 2 | 3 |
| Ofentemperatur [°C] | 900 | 900 | 800 | 900 | 900 | 900 |
| Cr(VI)-Gehalt [ppm] | 1129 | 1129 | 1594 | 975 | 850 | 3563 |
| Cr₂O₃-Gehalt [Gew.-%] | 9.55 | 9.55 | 8.17 | 9.29 | 9.54 | 9.72 |
| Al₂O₃-Gehalt [Gew.-%] | 22.83 | 22.83 | 22.88 | 23.04 | 23.00 | 23.07 |
| Fe₂O₃-Gehalt [Gew.-%] | 44.23 | 44.23 | 45.37 | 44.32 | 45.73 | 46.32 |
| MgO [Gew.-%] | 14.85 | 14.85 | 14.63 | 14.53 | 15.21 | 14.82 |
| CaO-Gehalt [Gew.-%] | 0.65 | 0.65 | 0.76 | 0.71 | 0.08 | 0.07 |
| SiO₂-Gehalt [Gew.-%] | 2.58 | 2.58 | 2.45 | 2.43 | 1.65 | 1.49 |
| Na₂O-Gehalt [Gew.-%] | 4.20 | 4.20 | 4.66 | 4.60 | 3.72 | 3.43 |
| Andere [Gew.-%] | 1.11 | 1.11 | 1.08 | 1.08 | 1.07 | 1.08 |

### 2. Bestimmung von Abrieb und Wasseraufnahme

Aus einer Mischung von Zement und Sand (Verhältnis 1:8) und Wasser wurden ohne Zugabe des reduzierten oxidischen Feststoffs Pflastersteine hergestellt (Beispiel 1, Referenzproben). Unter identischen Bedingungen wurden Pflastersteine hergestellt, bei denen 20% (Beispiel 2) oder 30% (Beispiel 3) des Zements durch den nach Schritt c) des erfindungsgemäßen Verfahrens erhaltenen reduzierten oxidischen Feststoff ersetzt wurden. Nach 28 Tagen Aushärtung wurden von den erhaltenen Pflastersteinen - gemäß dem in SANS 1058:2012 (South African National Standard 1058:2012, Edition 2.1 "Concrete paving blocks") beschriebenen Verfahren - der Abrieb und die Wasseraufnahme bestimmt. In Abweichung zu SANS 1058:2012 wurden beide Eigenschaften allerdings nur an drei Proben ermittelt.

Es ist zu erkennen, dass sowohl Abrieb als auch Wasseraufnahme bei den Pflastersteinen, bei denen 20% des Zements durch den nach Schritt c) des erfindungsgemäßen Verfahrens erhaltenen reduzierten oxidischen Feststoffs ersetzt wurden (Beispiel 2), deutlich geringer sind als bei den Pflastersteinen, die ohne den reduzierten oxidischen Feststoff hergestellt wurden (Beispiel 1). Die Pflastersteine, bei denen 30% des Zements durch den reduzierten oxidischen Feststoff ersetzt wurden (Beispiel 3), weisen sogar noch bessere Werte auf. Die Pflastersteine aus Beispiel 3 erfüllen hinsichtlich Abrieb und Wasseraufnahme die Anforderungen aus SANS 1058:2012.

| Beispiel | Abrieb pro Pflasterstein in g | Wasseraufnahme pro Pflasterstein in % |
|---|---|---|
| 1 (Referenzproben) | 27,5 | 7,1 |
| | 35,2 | 7,4 |
| | 25,2 | 7,5 |
| 2 | 16,0 | 6,8 |
| | 19,6 | 7,4 |
| | 17,7 | 7,1 |
| 3 | 7,0 | 5,0 |
| | 5,7 | 5,9 |
| | 8,6 | 5,7 |

## Patentansprüche

1. Verfahren zur Reduktion von sechswertigem Chrom in oxidischen Feststoffen, enthaltend die Schritte:
a) Mischen des oxidischen Feststoffes, enthaltend Cr(VI), mit einer kohlenstoffhaltigen, im Bereich von 20 bis 100 °C flüssigen Verbindung,
b) Behandeln der nach a) erhaltenen Mischung unter Schutzatmosphäre in einem indirekt beheizten Reaktor bei einer Temperatur von 700 °C bis 1100 °C, besonders bevorzugt bei einer Temperatur von 800 °C bis 1000 °C,
c) Abkühlen des nach b) erhaltenen Reaktionsproduktes unter Schutzatmosphäre auf wenigstens 300 °C, vorzugsweise auf wenigstens 150°C,
wobei als kohlenstoffhaltige Verbindung eine Polyhydroxyverbindung, bevorzugt Glycerin oder ein flüssiges Polyethylenglykol, besonders bevorzugt Polyethylenglykol mit einer Molmasse von bis zu 600, eingesetzt wird, und
sich die kohlenstoffhaltige Verbindung bevorzugt bei Temperaturen > 150 °C zersetzt anstatt zu verdampfen.

2. Verfahren gemäß Anspruch 1, **dadurch gekennzeichnet, dass** der eingesetzte oxidische Feststoff einen Anteil von weniger als 15 Gew.-% Calciumoxid enthält, besonders bevorzugt weniger als 10 Gew.-% Calciumoxid, ganz besonders bevorzugt weniger als 5 Gew.-% Calciumoxid.

3. Verfahren gemäß Anspruch 1, **dadurch gekennzeichnet, dass** der eingesetzte oxidische Feststoff ein Chromerzrückstand ist.

4. Verfahren gemäß Anspruch 1, **dadurch gekennzeichnet, dass** als in Schritt a) genannte kohlenstoffhaltige Verbindung Glycerin, Polyethylenglykol mit einer Molmasse von 380 bis 420 oder ein Gemisch aus beiden in einem Massenverhältnis von 4:1 bis 15:1, bezogen auf die Masse von Cr(VI), eingesetzt wird.

5. Verfahren gemäß Anspruch 1, **dadurch gekennzeichnet, dass** der Kohlenstoff der in Schritt a) genannten kohlenstoffhaltigen Verbindung in einem molaren Verhältnis zu Cr(VI) von 5 : 1 bis 35 : 1 eingesetzt wird.

6. Verfahren gemäß Anspruch 1, **dadurch gekennzeichnet, dass** als in Schritt a) genannte kohlenstoffhaltige Verbindung Glycerin, Polyethylenglykol mit einer Molmasse von 380 bis 420 oder ein Gemisch aus beiden eingesetzt wird, und dass der Kohlenstoff der in Schritt a) genannten kohlenstoffhaltigen Verbindung in einem molaren Verhältnis zu Cr(VI) von 9 : 1 bis 23 : 1 eingesetzt wird.

7. Verfahren gemäß Anspruch 1, **dadurch gekennzeichnet, dass** der Schritt a) in einem kontinuierlich arbeitenden Mischaggregat erfolgt.

8. Verfahren gemäß Anspruch 1, **dadurch gekennzeichnet, dass** der Schritt b) in einem kontinuierlich arbeitenden indirekt beheizten Reaktor erfolgt.

9. Verfahren gemäß Anspruch 1, **dadurch gekennzeichnet, dass** der Schritt c) in einem kontinuierlich arbeitenden Kühlaggregat erfolgt.

10. Verfahren gemäß Anspruch 1, **dadurch gekennzeichnet, dass** der oxidische Feststoff in einer Wasser enthaltenden Form in Schritt a) eingesetzt wird, vorzugsweise mit einem Wassergehalt von bis zu 2.0 Gew.-% Wasser, besonders bevorzugt von weniger als 1.0 Gew.-% Wasser.

11. Verfahren gemäß Anspruch 1, **dadurch gekennzeichnet, dass** dem oxidischen Feststoff in Schritt a) außer der kohlenstoffhaltigen Verbindung noch weitere, die Verarbeitbarkeit der hergestellten Mischung Hilfsmittel zugesetzt werden, vorzugsweise pyrogene Kieselsäure, Silikate, Aluminate und Alumosilikate.

12. Verfahren gemäß Anspruch 1, **dadurch gekennzeichnet, dass** der oxidische Feststoff bis zu 80000 ppm, besonders bevorzugt von bis zu 50000 ppm, Cr(VI) enthält.

13. Verfahren gemäß Anspruch 3, **dadurch gekennzeichnet, dass** der Chromerzrückstand bis zu 10000 ppm Cr(VI) enthält.

14. Verfahren gemäß Anspruch 3, **dadurch gekennzeichnet, dass** eine Mischung aus Chromerzrückstand und sonstigem Rückstand, vorzugsweise Vanadat-haltig, eingesetzt wird, wobei die Mischung bis zu 20000 ppm Cr(VI) enthält.

15. Verfahren gemäß Anspruch 1, **dadurch gekennzeichnet, dass** das Verfahrensprodukt einen Cr(VI)-Gehalt < 640 ppb, bevorzugt von < 107 ppb, besitzt.

16. Reduzierter oxidischer Feststoff, hergestellt gemäß einem der Ansprüche 1 bis 15.

17. Reduzierter oxidischer Feststoff gemäß Anspruch 16, **dadurch gekennzeichnet, dass** der oxidische Feststoff einen Anteil von weniger als 15 Gew.-% Calciumoxid enthält, bevorzugt weniger als 10 Gew.-% Calciumoxid, besonders bevorzugt weniger als 5 Gew.-% Calciumoxid.

18. Verwendung des reduzierten oxidischen Feststoffs gemäß einem der Ansprüche 16 oder 17 als Füllstoff bei der Herstellung von kalk- und/oder zementgebundenen Baustoffen und/ oder von Asphalt.

19. Kalk- oder zementgebundene Baustoffe oder Asphalt, enthaltend den reduzierten oxidischen Feststoff gemäß Anspruch 16 oder 17.

## Claims

1. Process for reducing hexavalent chromium in oxidic solids, which comprises the steps:
a) mixing of the oxidic solid containing Cr(VI) with a carbon-containing compound which is liquid in the range from 20 to 100°C,
b) treatment of the mixture obtained after a) in an indirectly heated reactor at a temperature of from 700°C to 1100°C, particularly preferably at a temperature of from 800°C to 1000°C, under a protective atmosphere,
c) cooling of the reaction product obtained after b) to at least 300°C, preferably at least 150°C, under a protective atmosphere,
wherein a polyhydroxy compound, preferably glycerol or a liquid polyethylene glycol, particularly preferably polyethylene glycol having a molar mass of up to 600, is used as carbon-containing compound, and
the carbon-containing compound preferably decomposes instead of vaporizing at temperatures of > 150°C.

2. Process according to Claim 1, **characterized in that** the oxidic solid used contains a proportion of less than 15% by weight of calcium oxide, particularly preferably less than 10% by weight of calcium oxide, very particularly preferably less than 5% by weight of calcium oxide.

3. Process according to Claim 1, **characterized in that** the oxidic solid used is a chrome ore residue.

4. Process according to Claim 1, **characterized in that** glycerol, polyethylene glycol having a molar mass of from 380 to 420 or a mixture of the two is used as the carbon-containing compound mentioned in step a) in a mass ratio of from 4:1 to 15:1, based on the mass of Cr(VI).

5. Process according to Claim 1, **characterized in that** the carbon of the carbon-containing compound mentioned in step a) is used in a molar ratio to Cr(VI) of from 5:1 to 35:1.

6. Process according to Claim 1, **characterized in that** glycerol, polyethylene glycol having a molar mass of from 380 to 420 or a mixture of the two is used as the carbon-containing compound mentioned in step a) and **in that** the carbon of the carbon-containing compound mentioned in step a) is used in a molar ratio to Cr(VI) of from 9:1 to 23:1.

7. Process according to Claim 1, **characterized in that** step a) is carried out in a continuously operating mixing apparatus.

8. Process according to Claim 1, **characterized in that** step b) is carried out in a continuously operating indirectly heated reactor.

9. Process according to Claim 1, **characterized in that** step c) is carried out in a continuously operating cooling apparatus.

10. Process according to Claim 1, **characterized in that** the oxidic solid is used in a water-containing form in step a), preferably with a water content of up to 2.0% by weight of water, particularly preferably less than 1.0% by weight of water.

11. Process according to Claim 1, **characterized in that**, apart from the carbon-containing compound, further auxiliaries which improve the processability of the mixture produced, preferably pyrogenic silica, silicates, aluminates and aluminosilicates, are added to the oxidic solid in step a).

12. Process according to Claim 1, **characterized in that** the oxidic solid contains up to 80 000 ppm, particularly preferably up to 50 000 ppm, of Cr(VI).

13. Process according to Claim 3, **characterized in that** the chrome ore residue contains up to 10 000 ppm of Cr(VI).

14. Process according to Claim 3, **characterized in that** a mixture of chrome ore residue and other residue, preferably vanadate-containing, is used, with the mixture containing up to 20 000 ppm of Cr(VI).

15. Process according to Claim 1, **characterized in that** the process product has a Cr(VI) content of < 640 ppb, preferably < 107 ppb.

16. Reduced oxidic solid produced according to any of Claims 1 to 15.

17. Reduced oxidic solid according to Claim 16, **characterized in that** the oxidic solid contains a proportion of less than 15% by weight of calcium oxide, preferably less than 10% by weight of calcium oxide, particularly preferably less than 5% by weight of calcium oxide.

18. Use of the reduced oxidic solid according to either Claim 16 or 17 as filler in the production of lime- and/or cement-bonded building materials and/or of asphalt.

19. Lime- or cement-bonded building materials or asphalt containing the reduced oxidic solid according to Claim 16 or 17.

## Revendications

1. Procédé de réduction de chrome hexavalent dans des solides oxydiques, comprenant les étapes suivantes :
a) le mélange du solide oxydique, contenant Cr(VI), avec un composé carboné, liquide dans la plage allant de 20 à 100 °C,
b) le traitement du mélange obtenu en a) sous une atmosphère protectrice dans un réacteur à chauffage indirect à une température de 700 °C à 1 100 °C, de manière particulièrement préférée à une température de 800 °C à 1 000 °C,
c) le refroidissement du produit de réaction obtenu en b) sous une atmosphère protectrice à au moins 300 °C, de préférence à au moins 150 °C,
un composé polyhydroxy, de préférence la glycérine ou un polyéthylène glycol liquide, de manière particulièrement préférée un polyéthylène glycol ayant une masse molaire de jusqu'à 600, étant utilisé en tant que composé carboné, et
le composé carboné se décomposant de préférence au lieu de s'évaporer à des températures > 150 °C.

2. Procédé selon la revendication 1, **caractérisé en ce que** le solide oxydique utilisé contient une proportion de moins de 15 % en poids d'oxyde de calcium, de manière particulièrement préférée de moins de 10 % en poids d'oxyde de calcium, de manière tout particulièrement préférée de moins de 5 % en poids d'oxyde de calcium.

3. Procédé selon la revendication 1, **caractérisé en ce que** le solide oxydique utilisé est un résidu de minerai de chrome.

4. Procédé selon la revendication 1, **caractérisé en ce que** la glycérine, un polyéthylène glycol ayant une masse molaire de 380 à 420 ou un mélange des deux en un rapport en masse de 4:1 à 15:1, par rapport à la masse de Cr(VI), est utilisé en tant que composé carboné mentionné à l'étape a).

5. Procédé selon la revendication 1, **caractérisé en ce que** le carbone du composé carboné mentionné à l'étape a) est utilisé en un rapport molaire par rapport à Cr(VI) de 5:1 à 35:1.

6. Procédé selon la revendication 1, **caractérisé en ce que** la glycérine, un polyéthylène glycol ayant une masse molaire de 380 à 420 ou un mélange des deux est utilisé en tant que composé carboné mentionné à l'étape a) et **en ce que** le carbone du composé carboné mentionné à l'étape a) est utilisé en un rapport molaire par rapport à Cr(VI) de 9:1 à 23:1.

7. Procédé selon la revendication 1, **caractérisé en ce que** l'étape a) a lieu dans un appareil de mélange fonctionnant en continu.

8. Procédé selon la revendication 1, **caractérisé en ce que** l'étape b) a lieu dans un réacteur à chauffage indirect fonctionnant en continu.

9. Procédé selon la revendication 1, **caractérisé en ce que** l'étape c) a lieu dans un appareil de refroidissement fonctionnant en continu.

10. Procédé selon la revendication 1, **caractérisé en ce que** le solide oxydique est utilisé sous une forme contenant de l'eau à l'étape a), de préférence ayant une teneur en eau de jusqu'à 2,0 % en poids d'eau, de manière particulièrement préférée de moins de 1,0 % en poids d'eau.

11. Procédé selon la revendication 1, **caractérisé en ce que** des adjuvants supplémentaires, qui favorisent l'usinabilité du mélange fabriqué, de préférence de la silice pyrogénée, des silicates, des aluminates et des alumosilicates, sont encore ajoutés au solide oxydique à l'étape a) en plus du composé carboné.

12. Procédé selon la revendication 1, **caractérisé en ce que** le solide oxydique contient jusqu'à 80 000 ppm, de manière particulièrement préférée jusqu'à 50 000 ppm, de Cr(VI).

13. Procédé selon la revendication 3, **caractérisé en ce que** le résidu de minerai de chrome contient jusqu'à 10 000 ppm de Cr(VI).

14. Procédé selon la revendication 3, **caractérisé en ce qu'**un mélange de résidu de minerai de chrome et d'un autre résidu, de préférence contenant du vanadate, est utilisé, le mélange contenant jusqu'à 20 000 ppm de Cr(VI).

15. Procédé selon la revendication 1, **caractérisé en ce que** le produit du procédé présente une teneur en Cr(VI) < 640 ppb, de préférence < 107 ppb.

16. Solide oxydique réduit, fabriqué selon l'une quelconque des revendications 1 à 15.

17. Solide oxydique réduit selon la revendication 16, **caractérisé en ce que** le solide oxydique contient une proportion de moins de 15 % en poids d'oxyde de calcium, de préférence de moins de 10 % en poids d'oxyde de calcium, de manière particulièrement préférée de moins de 5 % en poids d'oxyde de calcium.

18. Utilisation du solide oxydique réduit selon l'une quelconque des revendications 16 ou 17 en tant que charge lors de la fabrication de matériaux de construction liés par de la chaux et/ou du ciment et/ou d'asphalte.

19. Matériaux de construction liés par de la chaux ou du ciment ou asphalte, contenant le solide oxydique réduit selon la revendication 16 ou 17.
